# EUROPÄISCHE PATENTSCHRIFT

(11) **EP 3 545 247 B1**
(45) Veröffentlichungstag und Bekanntmachung des Hinweises auf die Patenterteilung: **13.04.2022**
(21) Anmeldenummer: 17800705.0
(22) Anmeldetag: 17.11.2017
(51) Int. Cl.: F25D 23/08

(54) **PROFILANORDNUNG, INSBESONDERE FÜR EIN KÜHL- UND/ODER GEFRIERGERÄT**
PROFILE ARRANGEMENT, IN PARTICULAR FOR A REFRIGERATOR AND/OR FREEZER
ENSEMBLE PROFILÉ, EN PARTICULIER POUR UN RÉFRIGÉRATEUR ET/OU CONGÉLATEUR

(30) Priorität: 22.11.2016 DE 202016106531 U
(43) Veröffentlichungstag der Anmeldung: 02.10.2019
(73) Patentinhaber: REHAU Industries SE & Co. KG, 95111 Rehau (DE)
(72) Erfinder: PAMMLER, Thomas, 08606 Oelsnitz (DE); BRETTMANN, Matthias, 95032 Hof (DE); WILLERT, Manfred, 91257 Pegnitz (DE); KERNCHEN, Uwe, 95445 Bayreuth (DE)
(86) Internationale Anmeldenummer: PCT/EP2017/001356
(87) Internationale Veröffentlichungsnummer: WO 2018/095565

(56) Entgegenhaltungen:
- DE-A1- 1 601 098
- DE-A1- 19 711 175
- DE-A1-102007 008 707
- DE-U1-202007 017 302
- DE-U1-202011 051 763
- DE-U1-202011 101 306
- DE-U1-202014 103 892
- GB-A- 555 566
- US-A- 3 461 610
- US-A- 5 147 121

## Beschreibung

Die Erfindung betrifft eine Profilanordnung, insbesondere für ein Kühl- und / oder Gefriergerät, umfassend wenigstens eine Basis, wenigstens eine Befestigungsanordnung, wenigstens ein Beschichtungselement, sowie wenigstens eine Dichtungsanordnung, welche wenigstens eine Hohlkammer aufweist und aus einem weichelastischen, polymeren Werkstoff hergestellt ist, mit einer Härte Shore A gemäß DIN EN ISO 868 von etwa 60 bis 90; ein Verschlusselement sowie ein Kühl- und / oder Gefriergerät mit einer solchen Profilanordnung.

Derartige Profilanordnungen sind im Stand der Technik bereits beschrieben. Diese Profilanordnungen haben insbesondere im Einsatz bei Kühl-und / oder Gefriergeräten die wichtige Funktion, den konstruktiv bedingten Spalt zwischen dem Verschlusselement und einem Korpus abzudichten, Toleranzen auszugleichen und im Falle des Einsatzes von Magnetprofilanordnungen das Verschließen der Kühlgerätetür am Korpus mittels Magnethaftkraft zu gewährleisten. Dabei erfolgt bei den Profilanordnungen gemäß des Standes der Technik der Toleranzausgleich sowie der Hub der Profilanordnung mittels unterschiedlicher Balgkonstruktionen, welche im Sichtbereich dieser Profilanordnungen deutlich erkennbar sind. So offenbart die EP 0 599 161 B1 eine derartig gattungsgemäße Profilanordnung.

Die Profilanordnung ist hierbei als Dichtungsanordnung ausgebildet für die Tür eines Kühl- oder Gefriergerätes, mit einem wärmeisolierenden Gehäuse, dessen Öffnung mit einer Tür verschließbar ist, die an ihrer der Öffnung zugewandten, mit einer Innenverkleidung ausgestatteten Seite eine am Rand der Tür umlaufend angeordnete, balgartige Magnetdichtung aufweist, die mit einem Dichtungskopf und einem Dichtungsfuß ausgestattet ist, die miteinander mit flexiblen, als Dehnfalten ausgebildeten Wandungen verbunden sind, wobei der Dichtungsfuß in einer öffnungsseitig sich verjüngenden, zur Türöffnung gerichteten Aufnahmenut an der Innenverkleidung verankert ist, während der mit Magnetleisten ausgestattete Dichtungskopf im geschlossenen Zustand der Tür am Öffnungsrand des Gehäuses aufliegt und die Tür am Öffnungsrand festhält, wobei der Dichtungskopf zum Dichtungsfuß seitlich versetzt angeordnet ist, welcher mit einer einseitigen Ausbauchung ausgestattet ist, welche mit einem Hinterschnitt in der Aufnahmenut zusammenwirkt und welche entgegengesetzt zum seitlichen Versatz näher am Dichtungskopf angeordnet ist, wobei sich die der Ausbauchung gegenüberliegende Seite des Dichtungsfußes in der Aufnahmenut abstützt, wobei der Dichtungsfuß mit einem Einführkeil versehen ist und auf seiner der Ausbauchung gegenüberliegenden Seite einen Vorsprung aufweist, welchem in Wesentlichen höhengleich zum Maximum der Ausbauchung angeordnet ist und welcher in der Aufnahmenut sich unter einer geringen Vorspannung am Wandabschnitt der Aufnahmenut abstützt. Dabei sind die als Dehnfalten ausgebildeten Wandungen von der die Magnetleiste aufnehmenden Hohlkammer des Dichtungskopfes beabstandet angeordnet.

Eine weitere gattungsgemäße Profilanordnung ist in der DE 601 15 098 T2 offenbart. Diese gattungsgemäße Profilanordnung ist als verbesserte Dichtungsanordnung für Kühlschränke und ähnliches mit einem aus Kunststoffmaterial hergestellten Profil ausgebildet, wobei die Anordnung aus einem Schrank, einer Tür und einem Innentürfeldelement, welches mit dem Schrank gekoppelt werden kann und einem Abschnitt einer Balgdichtung besteht, welche einen abgedichteten Verschluss zwischen der Tür und dem Schrank bereitstellt, wobei vorgesehen ist, dass ein Profil und der Dichtungsabschnitt zusammengepasst sind oder ein einzelnes integrales Teil ausbilden, welches durch Koextrusion von zwei Materialien, welche verschiedene Festigkeitsgrade aufweisen, hergestellt ist, um so, falls nötig, ein bequemes Ablösen des Dichtungsabschnitts vom Profil entlang des Bereichs ihrer Verbindung zu ermöglichen, wobei das Profil eine Rille, die dazu ausgestattet ist, einen Ersatzabschnitt einer Balgdichtung aufzunehmen und wenigstens einen elastisch nachgiebigen Seitenabschnitt aufweist, welcher wirkt, um eine Schnappverbindung zwischen dem Profil und dem Innentürfeldelement bereitzustellen, wobei der Abschnitt mit einer gerillten Aufnahme endet, welche einen im Wesentlichen C-förmigen Querschnitt aufweist und so ausgestaltet ist, um eine Kante des Innentürfeldelements aufzunehmen, wobei man sich weiter vorstellt, dass das Profil eine Basis aufweist, welche an gegenüberliegenden Enden mit Dichtungsstreifen versehen ist, die mit der Tür und dem Innentürfeldelement zusammenwirken, wobei an der gerillten Aufnahme, welche einen im Wesentlichen C-förmigen Querschnitt aufweist, wenigstens ein Dichtstreifen vorgesehen ist, welcher aus einem weichen Material hergestellt ist und gegenüberliegend der Kante des Innentürfeldelements eingerichtet ist, sodass, wenn das Innentürfeldelement wirksam mit dem Profil gekoppelt ist, der Dichtungsstreifen unter der Wirkung einer elastischen Rückstellung des Abschnitts gegen die Kante des Innentürfeldelements zusammengedrückt wird, wobei man sich weiter vorstellt, dass ein

Krümmungsbereich im rechten Winkel des Innentürfeldelements einen Radius von etwa 3 bis 6 mm aufweist, um so eine optimale Kontrastwirkung mit einem der Dichtungsstreifen der Basis des Profils sicherzustellen.

Der Dichtungsabschnitt ist weiter so ausgebildet, dass er eine dehnbare Kammer festlegt, die als ein Balg wirkt und eine obere Kammer aufweist, die ausgestaltet ist um einen Stab aus magnetischem Material aufzunehmen. Zwischen der oberen Kammer bzw. der dehnbaren Kammer und dem der Dichtungsanordnung ist ein Spalt ausgebildet.

Nachteilig bei diesem Stand der Technik ist es, dass sich in den verschiedenen Geometrien der Balgdichtungen bzw. der Dichtungsanordnungen sehr leicht Verschmutzungen im Bereich der Dehnfalten absetzen, die sich dann nur sehr schwierig entfernen lassen.

Weiterhin nachteilig ist, dass bei bestimmungsgemäßer Verwendung dieser Dichtungsanordnungen es Material bedingt zu einer, wenn auch geringfügigen, Diffusion von Additiven bspw. des Weichmachers kommen kann, welche einerseits die elastischen Eigenschaften der Dichtungsanordnungen negativ beeinflusst und andererseits dazu führen kann, dass auch die sichtbaren Bauteile wie der Korpus sowie die Tür des Kühl- und/oder Gefriergeräten an ihrer Oberfläche optische Beeinträchtigungen aufweisen können.

Ein weiterer Nachteil der Profilanordnungen aus dem Stand der Technik besteht darin, dass insbesondere die bei geschlossenen Kühl- und / oder Gefriergeräten dem Betrachter entgegentretende Optik im Spalt zwischen der Tür und dem Korpus des Kühl- und/oder Gefriergerätes durch diese Profilanordnung optisch nicht ansprechend wirken, was auch dadurch bedingt ist, dass eine Profilanordnung, die Tür sowie der Korpus aus unterschiedlichen Werkstoffen hergestellt sind und so eine andere Optik bzw. eine andere Haptik aufweisen. Weiterhin nachteilig ist, dass es im Stand der Technik nur sehr begrenzte Gestaltungsmöglichkeiten der Profilanordnung bestehen, welche aber optisch bzw. haptisch zu den teils sehr hochwertigen Kühl-und/oder Gefriergeräten optisch abfallen.

Hier setzt die Erfindung ein, die sich die Aufgabe gestellt hat, eine gattungsgemäße Profilanordnung zur Verfügung zu stellen, die die Nachteile des bekannten Standes der Technik überwindet, die wirtschaftlich und kostengünstig herstellbar ist, die den konstruktiv bedingten Spalt zwischen Verschlusselement und Korpus eines Kühl- und / oder Gefriergerätes optisch ansprechend abdeckt, die reinigungsfreundlich ist und bei der nahezu keine Diffusion aus dem verwendeten Werkstoff auftritt; einem derartigen Verschlusselement sowie ein Kühl- und/oder Gefriergerät mit jeweils einer solchen Profilanordnung.

In der DE 19711175 A1 ist offenbart eine Dichtprofilleiste mit einem auf einen Gehäuseflansch aufsetzbaren Halteteil und einem gegen eine Gehäuseabdeckung wirkenden Dichtteil, wobei die Dichtprofilleiste mit einem sowohl mit dem Gehäuseflansch als auch mit der Gehäuseabdeckung durchlaufend in Anlageberührung stehenden Überbrückungselement aus elektrisch leitfähigen Material ausgestattet ist. Das Überbrückungselement ist dabei aus Metallfäden oder dünnen Metalldrähten oder einer Litze ausgebildet und durch kleben, schweißen, kaschieren, laminieren oder Koextrusion innig mit der Dichtprofilleiste verbunden

Die DE 202007017302 U1 offenbart eine Gleitdichtung für Fenster, Türen, Rollläden und dergleichen, mit mindestens einem Dichtungsfuß, mittels dessen die Gleitdichtung an einem Bauteil befestigbar ist, mit mindestens einem geschlossenen Hohlprofilkörper, der mindestens eine Dichtzone mit mindestens einer Gleitschicht sowie zwei Seitenwände aufweist, die sich ausgehend von der Dichtzone in Richtung auf den Dichtfuß erstrecken, wobei der mindestens eine geschlossene Hohlprofilkörper an seinen beiden Seitenwänden jeweils mindestens eine in das Innere des Hohlprofilkörpers gerichtete Einwölbung aufweist. Der Hohlprofilkörper ist aus einem elastomeren Material mit einer Shore A- Härte von 40 bis 60 und durch Koextrusion mit dem Dichtungsfuß aus Hartmaterial verbunden. An der dem Dichtungsfuß abgewandten Außenseite ist eine Gleitschicht aus hartem Material durch Koextrusion eingeformt.

DE 10 2007 008707 A1 und DE 20 2014 103892 U1 offenbaren eine ähnliche Profilanordnung für ein Kühl- und oder Gefriergerät.

Erfindungsgemäß wird die Aufgabe durch die Merkmale des Anspruches 1 gelöst. Weitere vorteilhafte Ausgestaltungen sind in den Unteransprüchen beschrieben.

Es hat sich überraschend herausgestellt, dass eine Profilanordnung, insbesondere für Kühl-und / oder Gefriergerät, umfassend wenigstens eine Basis, wenigstens eine Befestigungsanordnung, wenigstens ein Beschichtungselement, sowie wenigstens eine Dichtungsanordnung, welche wenigstens eine Hohlkammer aufweist und aus einem weichelastischen, polymeren Werkstoff hergestellt ist, mit einer Härte Shore A gemäß DIN EN ISO 868 von etwa 60 bis 90, sich dadurch auszeichnet, dass das Beschichtungselement stoffschlüssig an der Dichtungsanordnung angeordnet ist. Die erfindungsgemäße Profilanordnung ist dabei so ausgebildet, dass für die bestimmungsgemäße Verwendung wenigstens die sichtbare Oberfläche der Dichtungsanordnung, welche in dem konstruktiv bedingten Spalt zwischen dem Verschlusselement und dem Korpus eines Kühl- und / oder Gefriergerätes sichtbar ist, durch ein Beschichtungselement diffusionsfest verschlossen ist. Ein weiterer Vorteil der erfindungsgemäßen Profilanordnung besteht darin, dass bei deren bestimmungsgemäßer Verwendung auch wenigstens die, dem Korpus des Kühl-und/oder Gefriergerätes gegenüberliegend angeordnete, Oberfläche der Dichtungsanordnung ebenfalls diffusionsfest verschlossen ist.

Die erfindungsgemäße Profilanordnung ist auch so ausgebildet, dass das Beschichtungselement stoffschlüssig an wenigstens einer, die Hohlkammer umgebenden, Wand der Dichtungsanordnung angeordnet ist. Hierdurch ist einerseits sichergestellt, dass das Beschichtungselement die Wand der Dichtungsanordnung diffusionsfest verschließt während es andererseits dadurch auch möglich ist, das bei bestimmungsgemäßer Verwendung an einem Verschlusselement und / oder einem Kühl- und / oder Gefriergerät das stoffschlüssig an der Profilanordnung angeordnete Beschichtungselement den konstruktiv bedingten Spalt zwischen dem Verschlusselement und dem Korpus des Kühl- und / oder Gefriergerätes optisch ansprechend, abdeckend verschließt. Ebenfalls vorteilhaft ist, dass bei bestimmungsgemäßer Verwendung der erfindunggemäßen Profilanordnung auch wenigstens die, dem Korpus des Kühl-und/oder Gefriergerätes gegenüberliegend angeordnete, Oberfläche der Dichtungsanordnung diffusionssicher verschlossen ist.

Ein weiterer Vorteil der erfindungsgemäßen Profilanordnung besteht auch darin, dass durch die Anordnung, den Werkstoff sowie die Ausgestaltung des stoffschlüssig an der Dichtungsanordnung angeordneten Beschichtungselementes der konstruktiv bedingte Spalt zwischen dem Verschlusselement und dem Korpus des Kühl- und / oder Gefriergerätes nicht nur optisch ansprechend gestaltet ist, sondern das die erfindungsgemäße Profilanordnung auch sehr reinigungsfreundlich ist, beispielsweise durch eine glatte Oberfläche des Beschichtungselementes.

Weiterhin vorteilhaft bei der erfindungsgemäßen Profilanordnung ist, dass das Beschichtungselement mittels Druck und / oder Temperatur, vorzugsweise in einem Inline-Verfahren, auf die Dichtungsanordnung aufgebracht ist. Hierdurch ist es erstmals überraschenderweise gelungen, eine aus einem weichelastischen, polymeren Werkstoff hergestellte Dichtungsanordnung überhaupt mit einem Beschichtungselement stoffschlüssig zu verbinden, ohne das die Haupteigenschaften der erfindungsgemäßen Profilanordnung, insbesondere der Dichtungsanordnung, negativ beeinträchtigt sind. Hierdurch ist es ebenfalls überraschenderweise möglich, das Beschichtungselement insbesondere auf eine dünnwandige Hohlkammer einer Dichtungsanordnung der Profilanordnung stoffschlüssig und optisch ansprechend aufzubringen. Es liegt jedoch auch im Rahmen der Erfindung, dass das Beschichtungselement mittels Druck und/oder Temperatur in einem online-Verfahren bzw. in einem Off line-Verfahren auf eine Profilanordnung aufgebracht ist.

Es hat sich weiterhin als vorteilhaft bei der erfindungsgemäßen Profilanordnung herausgestellt, dass die Oberfläche der Dichtungsanordnung und / oder des Beschichtungselementes vor dem Aufbringen des Beschichtungselementes durch eine chemische und/oder physikalische Behandlung, vorzugsweise durch eine Wärme-, Flamm-, Plasma-, Mikrowellen-, Infrarot- oder Korona-Behandlung aktiviert ist. Hierdurch ist es überraschenderweise möglich, eine dauerhafte, stoffschlüssige Verbindung zwischen dem Beschichtungselement und der Dichtungsanordnung der erfindungsgemäßen Profilanordnung zu realisieren.

Erfindungsgemäss weist das Beschichtungselement wenigstens eine Oberschicht sowie wenigstens eine damit verbundene Unterschicht auf. Durch diese vorteilhafte Ausgestaltung des Beschichtungselementes der erfindungsgemäßen Profilanordnung ist es erstmals möglich, eine dauerhafte, stoffschlüssige Verbindung zwischen dem Beschichtungselement über die Unterschicht der Dichtungsanordnung der erfindungsgemäßen Profilanordnung zu realisieren und andererseits durch die Ausgestaltung, die Werkstoffe, sowie die Geometrie der Oberschicht zu erreichen, dass einerseits keine Diffusion bzw. Migration von Additiven aus der Dichtungsanordnung der erfindungsgemäßen Profilanordnung stattfindet und das andererseits die erfindungsgemäße Profilanordnung einen umfangreichen und dauerhaften Schutz insbesondere gegenüber UV-Strahlen aufweist. Ein weiterer Vorteil der erfindungsgemäßen Profilanordnung besteht darin, dass diese durch das Beschichtungselement auch einen dauerhaften Schutz gegen einen möglichen mikrobiellen Bewuchs, insbesondere bei einer bestimmungsgemäßen Verwendung des Kühl-und/oder Gefriergerätes beispielsweise in Küchen, aufweist.

Das Beschichtungselement der erfindungsgemäßen Profilanordnung weist weiterhin eine Oberschicht sowie eine damit stoffschlüssig verbundene Unterschicht auf. Die Unterschicht des Beschichtungselementes ist aus dem polymeren Werkstoff Polyvinylchlorid (PVC) hergestellt. Weiterhin weist die Unterschicht des Beschichtungselementes eine Härte Shore D gemäß DIN 53505 von etwa 70 bis 90, bevorzugt 75 bis 85 auf.

Durch die Variation der Dicke und/oder der Shore-Härte der Unterschicht des Beschichtungselementes ist es erstmals möglich, dass die Flexibilität des Beschichtungselements individuell einstellbar ist. Damit kann das Beschichtungselement z.B. auch als Stützelement dienen oder Unebenheiten der erfindungsgemäßen Profilanordnung ausgleichen.

Die Oberschicht des Beschichtungselements ist als mehrschichtige Folie, insbesondere als Kunststofffolie bspw. auf Basis eines Polyesters, mit einer darauf oder darunter angeordneten, metallischen Beschichtung ausgebildet und weist eine Dicke von etwa 0,01 mm auf.

Es hat sich weiterhin als vorteilhaft herausgestellt bei der erfindungsgemäßen Profilanordnung, dass die Unterschicht und/oder die Oberschicht des Beschichtungselementes wenigstens teilweise einen reaktiven, aktivierbaren Klebstoff aufweist. In diesem Zusammenhang kann es erfindungsgemäß vorgesehen sein, dass als Klebstoff thermoplastische oder reaktive Schmelzklebstoffe zum Einsatz kommen. Bei den Schmelzklebstoffen kann es sich um thermoplastische, insbesondere nichtreaktive Schmelzklebstoffe oder um reaktive Schmelzklebstoffe handeln. Diesbezüglich können als Schmelzklebstoffe thermoplastische Schmelzklebstoffe, insbesondere Schmelzklebstoffe auf Basis von Ethylen/Vinylacetaten (EVA); Polyolefinen, wie amorphen Poly-a-olefinen oder metallocenkatalytisch hergestellten Polyolefinen; Polyacrylaten; Copolyamiden; Copolyestern; und/oder thermoplastischen Polyurethanen oder ihren entsprechenden Co-und/oder Terpolymeren, eingesetzt werden. Zudem ist es erfindungsgemäß möglich, dass als Schmelzklebstoffe reaktive SchmelzklebStoffe, insbesondere feuchtigkeitsvernetzende und/oder strahlenvernetzende, insbesondere UV-vernetzende Schmelzklebstoffe, vorzugsweise Schmelzklebstoffe auf Basis von silangepfropften amorphen Poly-a-olefinen und/oder isocyanatterminierten Polyurethanen, besonders bevorzugt Schmelzklebstoffe auf Basis von isocyanatterminierten Polyurethanen, eingesetzt werden und/oder wobei als Schmelzklebstoffe reaktive Schmelzklebstoffe auf Basis strahlenvernetzender reaktiver Klebstoffe, insbesondere unter UV-Bestrahlung vernetzender Schmelzklebstoffe, eingesetzt werden können.

Ein weiterer Vorteil besteht darin, dass das so ausgebildete Beschichtungselement der erfindungsgemäßen Profilanordnung vorteilhafterweise gleichzeitig mit der erfindungsgemäßen Profilanordnung beispielsweise im Extrusionsverfahren, im Koextrusionsverfahren sowie im Postcoextrusionsverfahren wirtschaftlich und kostengünstig herstellbar ist.

In einer weiteren vorteilhaften Ausgestaltung weist die erfindungsgemäßen Profilanordnung als auch die Unterschicht des Beschichtungselementes wenigstens teilweise einen polymeren Werkstoff auf, ausgewählt aus der Gruppe wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol PPY);Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien.

Es konnte weiterhin festgestellt werden, dass bei der erfindungsgemäßen Profilanordnung auch die Dichtungsanordnung wenigstens teilweise einen polymeren Werkstoff aufweist, ausgewählt aus der Gruppe der Thermoplastischen Elastomere bspw. auf Olefinbasis und/oder auf Urethanbasis, der vernetzten thermoplastischen Elastomere auf Olefinbasis, der Thermoplastischen Copolyester, der Styrol-Blockcopolymere (SBS, SEBS, SEPS, SEEPS und MBS) sowie der Thermoplastischen Copolyamide. Weiterhin der weihmacherhaltigen Werkstoffe, bevorzugt Polypropylen, Acrylnitril-Butadien-Styrol-Copolymerisat, Polycarbonat, Polyvinylchlorid, Polymethylmethacrylat, Polyethylenterephthalat, Polyurethan und dgl., sowie aus Mischungen dieser Werkstoffe.

Somit lässt sich die erfindungsgemäße Profilanordnung wirtschaftlich und kostengünstig herstellen und insbesondere wenn der Werkstoff der Unterschicht des Beschichtungselementes mit dem Werkstoff der Dichtungsanordnung der erfindungsgemäßen Profilanordnung ähnlich oder gleich ist eine dauerhafte, optisch ansprechende, stoffschlüssige Verbindung realisieren.

Es hat sich weiterhin als vorteilhaft bei der erfindungsgemäßen Profilanordnung herausgestellt, dass die Dicke des Beschichtungselementes zwischen 0,01 bis 0,5 mm, vorzugsweise zwischen 0,01 bis 0,25 mm liegt. Hierdurch ist das Beschichtungselement der erfindungsgemäßen Profilanordnung an sich wirtschaftlich und kostengünstig herstellbar und lässt sich je nach Anforderungen insbesondere der die Dichtungsfunktion der erfindungsgemäßen Profilanordnung realisierenden Dichtungsanordnung eine optimale, stoffschlüssige Verbindung zwischen diesen realisieren.

In einer ebenfalls vorteilhaften Ausgestaltung ist die erfindungsgemäße Profilanordnung so ausgebildet, dass die Oberschicht des Beschichtungselementes als Dekorelement ausgebildet und / oder wenigstens teilweise ein Dekorelement aufweist. Somit kann neben der wichtigen diffusionshemmenden Funktion des Beschichtungselementes die erfindungsgemäße Profilanordnung so zur Verfügung gestellt werden, dass insbesondere der konstruktiv bedingte Spalt zwischen dem Verschlusselement und dem Korpus eines Kühl- und / oder Gefriergerätes optisch ansprechend, abdichtend verschließbar ist. Es liegt dabei auch im Rahmen der Erfindung, dass die Oberschicht des Beschichtungselementes und/oder das Dekorelement wenigstens teilweise einen metallischen Werkstoff aufweist bzw. als Metallfolie ausgebildet ist.

In einer weiteren ebenfalls vorteilhaften Ausgestaltung der erfindungsgemäßen Profilanordnung weist das Beschichtungselement an wenigstens einer Seite eine spezielle Beschichtung auf. Diese Beschichtung kann beispielsweise als reflektierende Verspiegelung ausgebildet sein, welche zu optimaler Reflektion der in der Umgebung des Kühl- und/oder Gefriergerätes befindlichen Wärme führt. Je nach der Dicke und Art des verwendeten Werkstoffes der Beschichtung kann eine Reduzierung des Energiedurchtritts um etwa bis zu 15 % realisiert werden. Vorteilhafterweise haben sich hier Beschichtungen aus einem metallischen Werkstoffen wie bspw. Aluminium, Gold, Silber und dgl. erwiesen. Es liegt jedoch auch im Rahmen der Erfindung, dass die Beschichtung aus thermoplastischen, duromeren bzw. keramischen Werkstoffen besteht.

Dabei hat es sich weiterhin als vorteilhaft herausgestellt bei der erfindungsgemäßen Profilanordnung, dass die Dicke des Beschichtungselementes zwischen 0,01 bis 0,5 mm, vorzugsweise zwischen 0,01 bis 0,25 mm liegt. Durch diese vorteilhafte Ausgestaltung des Beschichtungselementes ist eine erfindungsgemäße Profilanordnung zur Verfügung stellbar, bei der einerseits bei bestimmungsgemäßer Verwendung im konstruktiv bedingten Spalt zwischen dem Verschlusselement und dem Korpus der eines Kühl- und / oder Gefriergerätes aufweisende Teil der Dichtungsanordnung diffusionsdicht verschlossen und optisch ansprechbar ausgestaltet ist und andererseits auch der Teil der Dichtungsanordnung der erfindungsgemäßen Profilanordnung der mit dem Korpus bzw. dem Verschlusselement selbst bei bestimmungsgemäßer Verwendung in Wirkverbindung steht, dessen Oberfläche durch möglicherweise austretende Additive optisch nicht beeinträchtigen.

Ebenfalls vorteilhaft ist die erfindungsgemäße Profilanordnung so ausgebildet, dass die die Hohlkammer umgebenden Wände der Dichtungsanordnung eine Wandstärke von etwa 0,1 bis 2 mm, vorzugsweise 0,2 bis 1,5 mm aufweisen. Die erfindungsgemäße Profilanordnung ist somit wirtschaftlich und kostengünstig herstellbar und erfüllt somit ihre Grundfunktion, nämlich das Abdichten zwischen dem Verschlusselement und dem Korpus eines Kühl- und / oder Gefriergerätes bei bestimmungsgemäßer Verwendung über einen langen Zeitraum und ist andererseits überraschenderweise so ausgebildet, dass ein Beschichtungselement überhaupt erst stoffschlüssig auf wenigstens einem Teil der Wand dieser Dichtungsanordnung der erfindungsgemäßen Profilanordnung stoffschlüssig und optisch ansprechend fixierbar ist.

Es hat sich ebenfalls als vorteilhaft bei der erfindungsgemäßen Profilanordnung herausgestellt, dass die Dichtungsanordnung wenigstens ein Abdeckelement aufweist. Durch diese Ausgestaltung der erfindungsgemäßen Profilanordnung ist es also möglich, bei bestimmungsgemäßem Einsatz an einem Verschlusselement und/oder an einem Korpus eines Kühl- und / oder Gefriergerätes einen möglicherweise durch fertigungsbedingte und/oder montagebedingte Toleranzen entstehenden Spalt am Verschlusselement, bspw. bei Durchbiegungen des Verschlusselementes, unmittelbar sowie optisch ansprechend abzudecken.

Das Abdeckelement ist weiter so ausgebildet, dass es konstruktivbedingte Übergänge der Innenverkleidung zur Außenverkleidung eines Verschlusselements überdeckt.

Die Erfindung betrifft weiterhin ein Verschlusselement für ein Kühl- und / oder Gefriergerät mit einer Profilanordnung gemäß den vorherigen Ausführungen.

Weiterhin betrifft die Erfindung ein Kühl- und / oder Gefriergerät mit einer Profilanordnung gemäß den vorherigen Ausführungen.

Die erfindungsgemäße Profilanordnung soll nun an Ausführungsbeispielen, die diese nicht einschränken, beschrieben werden.

Es zeigen:
- Fig. 1:: perspektivische Darstellung eines geöffneten Kühl- und / oder Gefriergerätes mit einem Verschlusselement und einer Profilanordnung;
- Fig. 2:: perspektivische Darstellung eines verschlossenen Kühl- und / oder Gefriergerätes mit einem Verschlusselement und einer Profilanordnung;
- Fig. 3:: Schnittdarstellung einer erfindungsgemäßen Profilanordnung im Einbauzustand;
- Fig. 4:: Schnittdarstellung einer weiteren erfindungsgemäßen Profilanordnung;
- Fig. 5:: Schnittdarstellung einer weiteren erfindungsgemäßen Profilanordnung.
- Fig. 6:: Schnittdarstellung einer weiteren erfindungsgemäßen Profilanordnung.

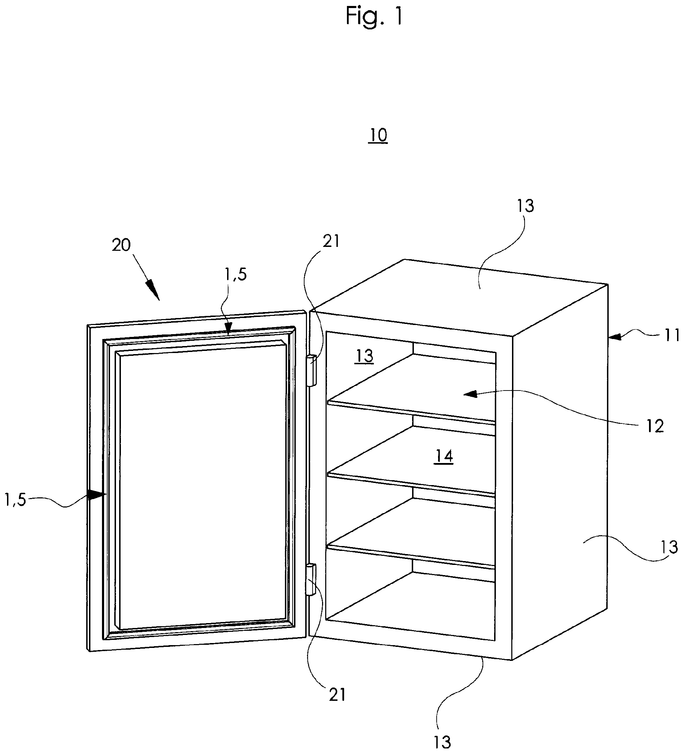

Die Fig. 1 zeigt eine perspektivische Darstellung eines geöffneten Kühl- und / oder Gefriergerätes 10 mit einem Verschlusselement 20 und einer erfindungsgemäßen Profilanordnung 1.

Das Kühl- und / oder Gefriergerät 10 weist einen schrankförmigen Korpus 11 auf, dessen Wände 13 den Innenraum 14 des Kühl- und / oder des Gefriergerätes 10 begrenzen. Die frontseitige Öffnung 12 des Korpus 11 ist durch das Verschlusselementes 20 und der an dieser angeordneten erfindungsgemäßen Profilanordnung 1 abdichtend verschließbar. Das Verschlusselement 20 ist über Scharnieranordnungen 21 in diesem Ausführungsbeispiel um eine vertikale Achse schwenkbar am Korpus 11 des Kühl- und / oder Gefriergerätes 10 angeordnet.

Die erfindungsgemäße Profilanordnung 1 ist in diesem Ausführungsbeispiel so an der dem Korpus 11 des Kühl- und / oder Gefriergerätes 10 gegenüberliegend angeordneten Seite des Verschlusselementes 20 angeordnet, dass die Profilanordnung 1 bei geschlossener Position des Verschlusselementes 20 um die Öffnung 12 des Kühl- und / oder Gefriergerätes 10 über das Beschichtungselement 5 am Korpus 11 anliegt und den Spalt zwischen dem Verschlusselement 20 und dem Korpus 11 des Kühl- und / oder Gefriergerätes 10 abdichtet.

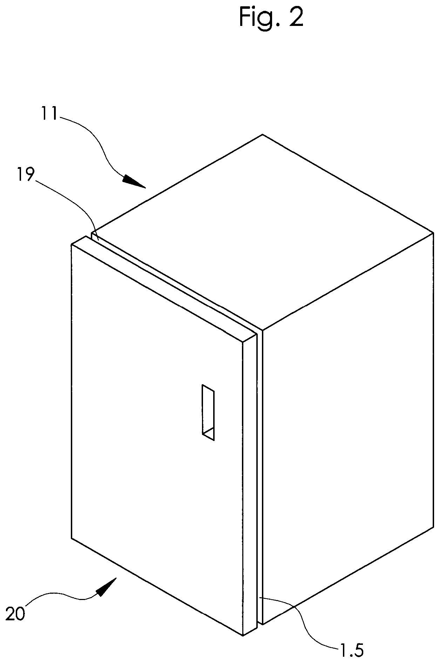

In der Fig. 2 zeigt eine perspektivische Darstellung eines verschlossenen Kühl- und / oder Gefriergerätes 10 mit einem Verschlusselement 20 und einer erfindungsgemäßen Profilanordnung 1.

Das Kühl- und / oder Gefriergerät 10 umfasst einen Korpus 11 und wenigstens ein, eine Öffnung des Korpus 11 verschließendes, Verschlusselement 20.

Zwischen dem Verschlusselement 20 sowie dem Korpus 11 ist ein Spalt 19 erkennbar, in dem eine erfindungsgemäße Profilanordnung 1 angeordnet ist, welche so ausgebildet ist, dass die nicht sichtbare Dichtungsanordnung ein Beschichtungselement 5 aufweist, welches den Spalt 19 optisch ansprechend und abdichtend verschließt.

Die erfindungsgemäße Profilanordnung 1 kann dabei sowohl am Verschlusselement 20 als auch am Korpus 11 des Kühl- und / oder Gefriergerätes 10 angeordnet sein.

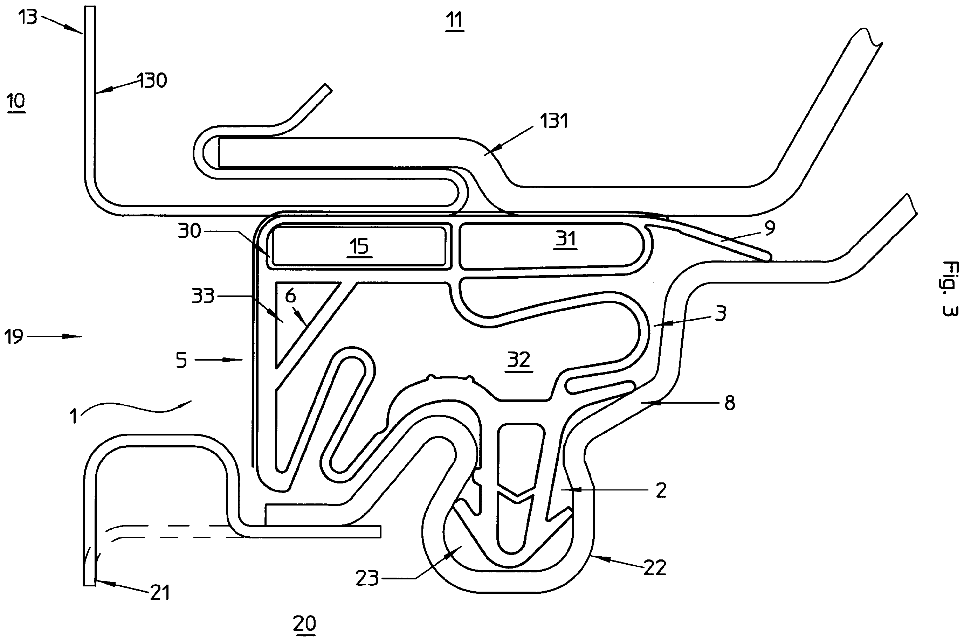

In der Fig. 3 ist eine Schnittdarstellung einer erfindungsgemäßen Profilanordnung 1 in ihrem Einbauzustand in einem nur im Detail dargestellten Ausschnitt eines Kühl- und / oder Gefriergerät 10 dargestellt.

Das Kühl- und / oder Gefriergerät 10 weist einen Korpus 11 auf, der in diesem Ausführungsbeispiel durch die Wand 13 gebildet ist.

Die Wand 13 des Korpus 11 des Kühl- und / oder Gefriergerätes 10 weist ein erstes Wandelement 130 auf, welches aus Metall hergestellt und mit einer Farb- bzw. Lackschicht beschichtet ist sowie ein daran angeordnetes zweites Wandelement 131, welches aus einem polymeren Werkstoff besteht. Das erste Wandelement 130 ist mit dem zweiten Wandelement 131 kraftschlüssig verbunden.

Gegenüber dem Korpus 11 des Kühl- und / oder Gefriergerätes 10 ist ein teilweise im Schnitt dargestelltes Verschlusselement 20 angeordnet, welches in diesem Ausführungsbeispiel ein erstes Verschlussteil 21, welches aus einem beschichteten, metallischen Werkstoff hergestellt ist und ein daran angeordnetes, zweites Verschlussteil 22 aufweist, welches aus einem polymeren Werkstoff hergestellt ist.

Im zweiten Verschlussteil 22 des Verschlusselements 20 ist eine Nut 23 angeordnet, in der die Befestigungsanordnung 2 der erfindungsgemäßen Profilanordnung 1 angeordnet ist.

Die erfindungsgemäße Profilanordnung 1 umfasst eine Basis 8, eine Befestigungsanordnung 2, ein Beschichtungselement 5 sowie wenigstens eine Dichtungsanordnung 3.

Die erfindungsgemäße Profilanordnung 1 ist in diesem Ausführungsbeispiel so ausgebildet, dass die Dichtungsanordnung 3 die Hohlkammern 30, 31, 32, 33 aufweist, wobei die Dichtungsanordnung 3 an der Basis 8 stoffschlüssig bzw. einstückig angeordnet ist.

An den die Hohlkammern 30, 31, 32, 33 umgebenden Wand der Dichtungsanordnung 3 ist das Beschichtungselement 5 angeordnet, welches stoffschlüssig an diesen angeordnet ist.

Die erfindungsgemäße Profilanordnung 1 ist so am Kühl- und / oder Gefriergerät 10 angeordnet, dass das an der Wand der Hohlkammer 30, 31, 32, 33 angeordnete Teil des Beschichtungselementes 5 den Spalt 19 zwischen dem Korpus 11 des Kühl- und / oder Gefriergerät 10 und dem Verschlusselement 20 optisch ansprechend und abdichtend verschließt.

Die erfindungsgemäße Profilanordnung 1 ist jedoch weiterhin so ausgebildet, dass das an der Wand der Hohlkammer 30, 31 der Dichtungsanordnung 3 ebenfalls stoffschlüssig angeordnete Beschichtungselement 5 das erste Wandelement 130 sowie teilweise das zweite Wandelement 131 der Wand 13 des Korpus 11 des Kühl- und / oder Gefriergerätes 10 so abdeckt, dass die Dichtungsanordnung 3 mit diesem nicht in direkte Wirkverbindung treten kann. So kann wirksam verhindert werden, dass aus dem Werkstoff der Dichtungsanordnung 3 möglicherweise Additive in das beschichtete, erste Wandelement 130 sowie das zweite Wandelement 131 diffundieren.

Die erfindungsgemäße Profilanordnung 1 ist somit vorteilhafterweise so an dem Kühl- und / oder Gefriergerät 10 angeordnet, dass die Grundfunktion, nämlich das Abdichten des Korpus 11 des Kühl- und / oder Gefriergerätes 10 von dem Verschlusselement 20 problemlos realisierbar ist, sowohl beim Öffnen des Verschlusselements 20 als auch beim Verschließen und es weiterhin erfindungsgemäß sichergestellt ist, dass eine materialbedingte Diffusion insbesondere aus dem Werkstoff der Dichtungsanordnung 3 in beispielsweise die Wand 13, welche das beschichtete, erste Wandelement 130 sowie das zweite Wandelement 131 umfasst, des Korpus 11 des Kühl- und / oder Gefriergerätes 10 durch das dazwischen angeordnete Beschichtungselement 5 erfolgreich verhindert ist.

Ein weiterer Vorteil der erfindungsgemäßen Profilanordnung 1 ist, dass bei bestimmungsgemäßem Einsatz in einem Kühl- und / oder Gefriergerät 10 insbesondere die durch den konstruktiv bedingten Spalt 19 zwischen dem Korpus 11 und dem Verschlusselement 20 des Kühl- und / oder Gefriergerätes 10 auftretenden beispielsweise UV-Strahlen sowie auch anderer äußerer Einflüsse nicht die Funktion der Dichtungsanordnung 3 der erfindungsgemäßen Profilanordnung 1 beeinträchtigen können, da diese optisch ansprechend und wirksam durch das stoffschlüssig mit dieser verbundene Beschichtungselement 5 geschützt ist. In diesem Ausführungsbeispiel der erfindungsgemäßen Profilanordnung 1 ist das Beschichtungselement 5 mittels Druck und Temperatur in einem Extrusions- bzw. Koextrusionsverfahren auf die Dichtungsanordnung 3 aufgebracht.

Die Dichtungsanordnung 3 der erfindungsgemäßen Profilanordnung 1 besteht in diesem Ausführungsbeispiel aus einem polymeren Werkstoff, nämlich aus Polyvinylchlorid (PVC) und weist eine Härte Shore A gemäß DIN EN ISO 868 von etwa 80 auf und ist somit auch wirtschaftlich und kostengünstig herstellbar sowie optisch an das Kühl-und/oder Gefriergerät anpassbar.

Das Beschichtungselement 5 der erfindungsgemäßen Profilanordnung 1 ist über eine nicht mehr sichtbare Unterschicht 52, welche als reaktiver Klebstoff auf Basis des Werkstoffes Polyvinylchlorid (PVC) stoffschlüssig mit der Dichtungsanordnung 3 verbunden ist und eine den Spalt 19 zwischen dem Korpus 11 und dem Verschlusselement 20 des Kühl- und / oder Gefriergerätes 10 abdeckende Oberschicht 51 aufweist. In diesem Ausführungsbeispiel weist das Beschichtungselement 5 eine Dicke von etwa 0,15 mm auf, wobei die Oberschicht 51 als an sich bekannte Folie aus einem metallischen Werkstoff wie beispielsweise Aluminium ausgebildet ist, die gegebenenfalls auch noch eine weitere Zwischenschicht und/oder eine Deckschicht aufweisen kann.

Die Wand der die Hohlkammern 30, 31, 32, 33 umgebenden Dichtungsanordnung 3 weist in diesem Ausführungsbeispiel eine Wandstärke von etwa 0,01 bis 2 mm, vorzugsweise 0,2 bis 1,5 mm auf.

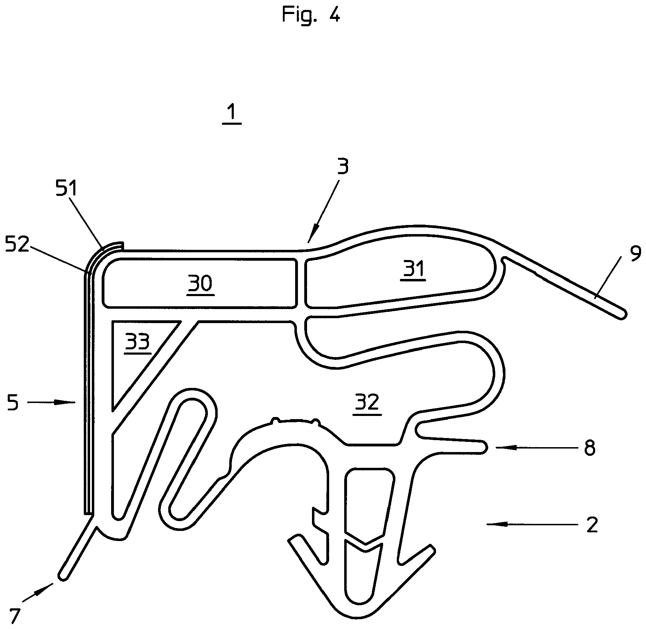

In der Fig. 4 ist eine Schnittdarstellung einer weiteren erfindungsgemäßen Profilanordnung 1 dargestellt.

Die erfindungsgemäße Profilanordnung 1, insbesondere für ein Kühl- und / oder Gefriergerät, umfasst eine Basis 8, eine Befestigungsanordnung 2, ein Beschichtungselement 5 sowie eine Dichtungsanordnung 3.

Die Dichtungsanordnung 3 der erfindungsgemäßen Profilanordnung 1 weist die Hohlkammern 30, 31, 32, 33 auf und ist aus einem weichelastischen polymeren Werkstoff hergestellt mit einer Härte Shore A gemäß DIN EN ISO 868 von etwa 78.

Die erfindungsgemäße Profilanordnung 1 weist in diesem Ausführungsbeispiel an ihrem der Basis 2 gegenüberliegenden freien Enden ein Abdeckelement 7 auf, welches etwa in einem spitzen Winkel einstückig an der Dichtungsanordnung 3 angeordnet ist. Vorteilhafterweise ist es dadurch erstmals möglich, bei bestimmungsgemäßem Einsatz an einem Verschlusselement und/oder an einem Korpus eines Kühl- und / oder Gefriergerätes einen möglicherweise durch fertigungsbedingte und/oder montagebedingte Toleranzen entstehenden Spalt am Verschlusselement, bspw. bei Durchbiegungen des Verschlusselementes, direkt abzudecken.

An dem der Basis 8 der erfindungsgemäßen Profilanordnung 1 gegenüberliegenden freien Ende der Dichtungsanordnung 3 weist die Wand der Hohlkammer 30, 32, 33 ein Beschichtungselement 5 auf.

Das Beschichtungselement 5 ist stoffschlüssig an der Dichtungsanordnung 3 angeordnet. In diesem Ausführungsbeispiel wurde die Dichtungsanordnung 3 sowie das Beschichtungselement 5 vor dem Aufbringen des Beschichtungselementes 5 durch eine WärmeBehandlung aktiviert.

Das Beschichtungselement 5 der erfindungsgemäßen Profilanordnung 1 weist in diesem Ausführungsbeispiel eine Oberschicht 51 sowie eine damit verbundene Unterschicht 52 auf. Die Unterschicht 52 des Beschichtungselementes 5 ist in diesem Ausführungsbeispiel aus dem polymeren Werkstoff Polyvinylchlorid (PVC) hergestellt und weist eine Dicke von etwa 0,15 mm auf. Die Unterschicht 52 des Beschichtungselements 5 ist weiterhin so ausgebildet, dass der polymere Werkstoff PVC einen K-Wert von etwa 60 nach DIN 53726 aufweist und eine Härte Shore D gemäß DIN 53505 von etwa 78.

Die Oberschicht 51 des Beschichtungselements 5 ist in diesem Ausführungsbeispiel als mehrschichtige Folie, insbesondere als Kunststofffolie auf Basis eines Polyesters mit einer darauf angeordneten, metallischen Beschichtung ausgebildet und weist eine Dicke von etwa 0,02 mm auf.

Das Beschichtungselement 5 der erfindungsgemäßen Profilanordnung wird in einem separaten Herstellungsprozess zur Verfügung gestellt und dann in einem Inline-Verfahren, in diesem Ausführungsbeispiel durch Extrusion in einem Werkzeug gemeinsam mit der erfindungsgemäßen Profilanordnung 1 in einem Herstellungsprozess zur Verfügung gestellt. Dabei ist die Oberschicht 51 des Beschichtungselementes 5 über die Unterschicht 52 stoffschlüssig mit der Dichtungsanordnung 3 der erfindungsgemäßen Profilanordnung 1 verbunden.

In diesem Ausführungsbeispiel ist die erfindungsgemäße Profilanordnung 1 so ausgebildet, dass bei deren bestimmungsgemäßer Verwendung in einem nicht dargestellten Kühl- und / oder Gefriergerät insbesondere äußere Einflüsse wie beispielsweise UV-Strahlen oder auch chemische Einflüsse beispielsweise durch die Reinigung der Oberfläche der erfindungsgemäßen Profilanordnung 1 wirksam von der die Grundfunktion realisierenden Dichtungsanordnung 3 abgeschirmt werden.

Ein weiterer Aspekt der erfindungsgemäßen Profilanordnung 1 besteht darin, dass durch die Wahl der Oberschicht 51 des Beschichtungselementes 5 es auch möglich ist, die Farbe - das Design bzw. die Oberfläche - die Haptik der erfindungsgemäßen Profilanordnung 1 des nicht dargestellten Kühl- und / oder Gefriergerätes jederzeit den Anforderungen und Wünschen problemlos anzupassen.

Mit der erfindungsgemäßen Profilanordnung 1 ist es erstmals überraschenderweise möglich, das Design bzw. die Haptik insbesondere von Kühl- und/oder Gefriergeräten in einer Echtmetall- Optik bzw. Echtmetall- Haptik zu realisieren.

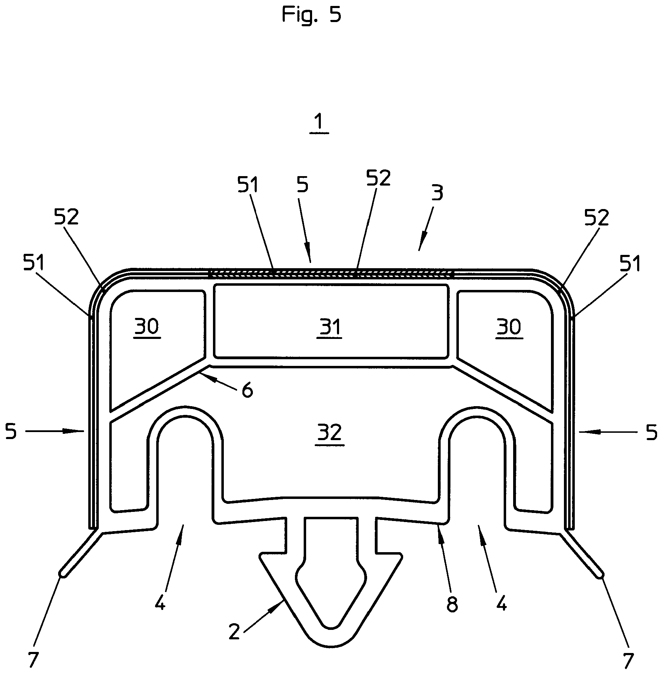

In der Fig. 5 ist die Schnittdarstellung einer weiteren erfindungsgemäßen Profilanordnung 1 dargestellt.

Die erfindungsgemäße Profilanordnung 1 umfasst eine Basis 8, wenigstens ein Befestigungselement 2, wenigstens eine Dichtungsanordnung 3 sowie wenigstens ein Beschichtungselement 5.

Die Dichtungsanordnung 3 der erfindungsgemäßen Profilanordnung 1 weist die Hohlkammer 30, 31, 32 auf und besteht aus einem weichelastischen polymeren Werkstoff mit einer Härte Shore A gemäß DIN EN ISO 868 von etwa 75, wobei der Werkstoff ein thermoplastisches Elastomer auf Basis von Polyolefin ist.

Die erfindungsgemäße Profilanordnung 1 weist in diesem Ausführungsbeispiel an ihren der Basis 2 gegenüberliegenden freien Enden jeweils ein Abdeckelement 7 auf, welches etwa in einem spitzen Winkel einstückig an der Dichtungsanordnung 3 angeordnet ist.

Weiterhin ist die erfindungsgemäße Profilanordnung 1 so ausgebildet, dass zwischen der Befestigungsanordnung 2 und den an den freien Enden der Dichtungsanordnung 3 angeordneten Abdeckelementen jeweils eine in der Basis 8 angeordnete Bewegungsanordnung 4 angeordnet ist. Bei bestimmungsgemäßer Verwendung der erfindungsgemäßen Profilanordnung 1 in einem nicht dargestellten Kühl- und / oder Gefriergerät dient die Bewegungsanordnung 4 dazu, die Grundfunktion der erfindungsgemäßen Profilanordnung 1, nämlich das Abdichten, bewegungstechnisch sicherzustellen.

Die erfindungsgemäße Profilanordnung 1 weist weiterhin ein stoffschlüssig an der Dichtungsanordnung 3 angeordnetes Beschichtungselement 5 auf.

Das Beschichtungselement 5 ist in diesem Ausführungsbeispiel über die gesamte Oberfläche der Hohlkammern 30, 31, 32 umgebenden Wände der Dichtungsanordnung 3 angeordnet. Das Beschichtungselement 5 weist eine Oberschicht 51 sowie eine damit verbundene Unterschicht 52 auf. Die Unterschicht 52 des Beschichtungselementes 5 ist ein reaktiv aktivierbarer Klebstoff ausgewählt aus der Gruppe der Polyolefine.

Weiterhin ist die erfindungsgemäße Profilanordnung so ausgebildet, dass an der Hohlkammer 31 der Dichtungsanordnung 3 der erfindungsgemäßen Profilanordnung 1 ein Beschichtungselement 5 angeordnet ist, welches eine Unterschicht mit einer Dicke von etwa 0,01 mm aufweist.

Weiterhin ist das Beschichtungselement 5 in diesem Ausführungsbeispiel so ausgebildet, dass die Oberschicht 51 eine Dicke von etwa 0,015 aufweist und ist in diesem Ausführungsbeispiel in einem Heißprägeverfahren (Hot stamping) auf die Profilanordnung 1 aufgebracht.

Die Oberschicht 51 des Beschichtungselementes 5 ist in diesem Ausführungsbeispiel weiterhin so ausgebildet, dass diese aus einem polymeren Werkstoff besteht, auf den eine metallische Beschichtung beispielsweise Aluminium aufgebracht ist, sodass die Oberschicht 51 des Beschichtungselementes 5 einerseits als Dekorelement ausgebildet ist und andererseits sowohl eine Diffusion aus dem Werkstoff der Dichtungsanordnung 3 wirksam verhindert wird, als auch die Funktion des in der Hohlkammer 31 angeordneten, nicht dargestellten Magnetelementes zum Verschließen des Kühl-und/oder Gefriergerät ermöglicht. Die erfindungsgemäße Profilanordnung 1 ist in diesem Ausführungsbeispiel weiterhin so ausgebildet, dass an den Außenwänden der Hohlkammer 30, 32 der Dichtungsanordnung 3 jeweils ein weiteres Beschichtungselement 5 angeordnet ist.

Das Beschichtungselement 5 weist eine Oberschicht 51 sowie eine damit verbundene Unterschicht 52 auf und ist jeweils stoffschlüssig mit der Wand der Hohlkammer 30, 32 der Dichtungsanordnung 3 der erfindungsgemäßen Profilanordnung 1 verbunden.

Das Beschichtungselement 5 weist in diesem Ausführungsbeispiel eine Gesamtdicke von etwa 0,162 mm auf, wobei die Dicke der Unterschicht 52 etwa 0,012 mm und die Dicke der Oberschicht 51 etwa 0,15 mm beträgt und ist in diesem Ausführungsbeispiel im Extrusionsverfahren auf die Profilanordnung 1 aufgebracht.

Die Unterschicht 52 des Beschichtungselements 5 ist in diesem Ausführungsbeispiel aus einem polymeren Werkstoff hergestellt, nämlich aus einem Polyolefin, insbesondere aus Polyethylen (PE), während die Oberschicht 51 des Beschichtungselementes 5 als metallische Folie aus Aluminium hergestellt ist.

Die erfindungsgemäße Profilanordnung 1 kann somit in diesem Ausführungsbeispiel durch die Wahl der Geometrie, des Werkstoffes sowie der Anordnung des Beschichtungselementes 5 mit verschiedensten neuen Funktionalitäten versehen werden, die einerseits eine wirtschaftliche und kostengünstige Herstellung der erfindungsgemäßen Profilanordnung 1 ermöglichen, die andererseits eine materialbedingte Diffusion von Additiven insbesondere aus der Dichtungsanordnung 3 der erfindungsgemäßen Profilanordnung 1 verhindern und die bei bestimmungsgemäßer Verwendung der erfindungsgemäßen Profilanordnung 1 im konstruktiv bedingten Spalt zwischen dem nicht dargestellten Korpus und dem Verschlusselement des Kühl- und / oder Gefriergerätes 10 ein optisch ansprechendes Ansehen sowie eine optimale Dichtfunktion gewährleistet.

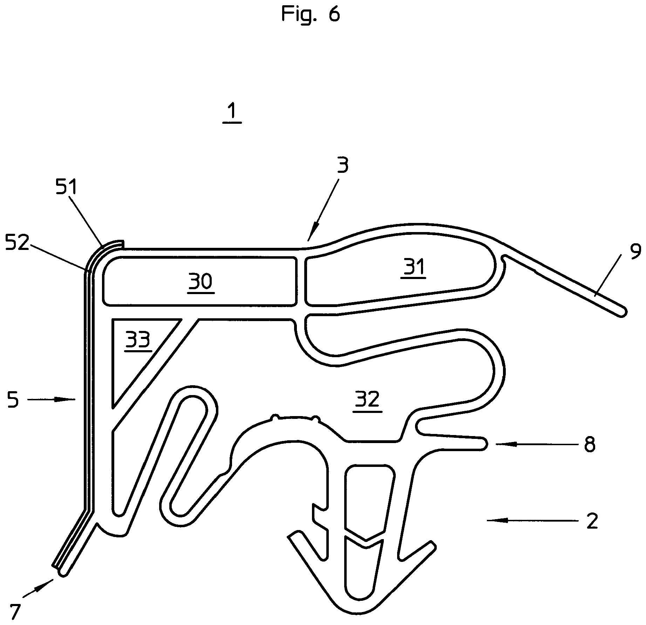

In der Fig. 6 ist eine Schnittdarstellung einer weiteren erfindungsgemäßen Profilanordnung 1 dargestellt.

Die erfindungsgemäße Profilanordnung 1 insbesondere für ein Kühl- und / oder Gefriergerät, ist analog zu der in Fig. 4 aufgebaut und umfasst eine Basis 8, eine Befestigungsanordnung 2, ein Beschichtungselement 5 sowie eine Dichtungsanordnung 3.

Die Dichtungsanordnung 3 der erfindungsgemäßen Profilanordnung 1 weist die Hohlkammern 30, 31, 32, 33 auf und ist aus einem weichelastischen polymeren Werkstoff hergestellt mit einer Härte Shore A gemäß DIN EN ISO 868 von etwa 80.

Die erfindungsgemäße Profilanordnung 1 weist in diesem Ausführungsbeispiel an ihrem der Basis 2 gegenüberliegenden freien Enden ein Abdeckelement 7 auf, welches etwa in einem spitzen Winkel einstückig an der Dichtungsanordnung 3 angeordnet ist. Vorteilhafterweise ist es dadurch erstmals möglich, bei bestimmungsgemäßem Einsatz an einem Verschlusselement und/oder an einem Korpus eines Kühl- und / oder Gefriergerätes einen möglicherweise durch fertigungsbedingte und/oder montagebedingte Toleranzen entstehenden Spalt am Verschlusselement, bspw. bei Durchbiegungen des Verschlusselementes, unmittelbar sowie optisch ansprechend abzudecken ist. Das Abdeckelement 7 ist weiter so ausgebildet, dass es konstruktivbedingte Übergänge der Innenverkleidung zur Außenverkleidung eines Verschlusselements überdeckt.

An dem der Basis 8 der erfindungsgemäßen Profilanordnung 1 gegenüberliegenden freien Ende der Dichtungsanordnung 3 weist die Wand der Hohlkammer 30, 32, 33 und das Abdeckelement 7 ein Beschichtungselement 5 auf.

Das Beschichtungselement 5 ist stoffschlüssig an der Dichtungsanordnung 3 und dem Abdeckelement 7 angeordnet.

Durch die Verwendung eines Beschichtungselements 5 mit bspw. einer metallischen Beschichtung lässt sich somit auch der komplette Spalt zwischen dem Verschlusselement und dem Korpus des Kühl- und/oder Gefriergerätes in einer Echtmetall- Optik, die genau der Optik des Verschlusselements und/oder des Korpus des Kühl- und/oder Gefriergerätes entspricht, darstellen.

Das Beschichtungselement 5 der erfindungsgemäßen Profilanordnung 1 weist in diesem Ausführungsbeispiel eine Oberschicht 51 sowie eine damit verbundene Unterschicht 52 auf. Die Unterschicht 52 des Beschichtungselementes 5 ist in diesem Ausführungsbeispiel aus dem polymeren Werkstoff Polyvinylchlorid (PVC) hergestellt. Die Unterschicht 52 des Beschichtungselementes 5, weist eine Dicke von etwa 0,15 mm auf. Weiterhin weist die Unterschicht 52 des Beschichtungselementes 5 eine Härte Shore D gemäß DIN 53505 von etwa 70 bis 90, bevorzugt 75 bis 85 auf.

Durch die Variation der Dicke und/oder der Shore-Härte der Unterschicht 52 des Beschichtungselementes 5 ist es erstmals möglich, dass die Flexibilität des Beschichtungselements 5 individuell einstellbar ist. Damit kann das Beschichtungselement 5 z.B. auch als Stützelement dienen oder Unebenheiten der Profilanordnung 1 ausgleichen.

Die Oberschicht 51 des Beschichtungselements 5 ist in diesem Ausführungsbeispiel als mehrschichtige Folie, insbesondere als Kunststofffolie, bspw. auf Basis eines Polyesters mit einer darauf oder darunter angeordneten, metallischen Beschichtung ausgebildet und weist eine Dicke von etwa 0,01 mm auf. Weiterhin ist die Oberschicht 51 des Beschichtungselements 5 mittels eine Heißklebers stoffschlüssig an der Unterschicht 52 des Beschichtungselements 5 angeordnet.

Das Beschichtungselement 5 der erfindungsgemäßen Profilanordnung 1 wird in einem separaten Herstellungsprozess zur Verfügung gestellt und dann in einem Inline-Verfahren, in diesem Ausführungsbeispiel durch Extrusion in einem Werkzeug gemeinsam mit der erfindungsgemäßen Profilanordnung 1 in einem Herstellungsprozess zur Verfügung gestellt. Dabei ist die Oberschicht 51 des Beschichtungselementes 5 über die Unterschicht 52 stoffschlüssig mit der Dichtungsanordnung 3 sowie dem Abdeckelement 7 der erfindungsgemäßen Profilanordnung 1 verbunden.

In diesem Ausführungsbeispiel ist die erfindungsgemäße Profilanordnung 1 so ausgebildet, dass bei deren bestimmungsgemäßer Verwendung in einem nicht dargestellten Kühl- und / oder Gefriergerät insbesondere äußere Einflüsse wie beispielsweise UV-Strahlen oder auch chemische Einflüsse beispielsweise durch die Reinigung der Oberfläche der erfindungsgemäßen Profilanordnung 1 wirksam von der die Grundfunktion realisierenden Dichtungsanordnung 3 abschirmbar sind. Ein weiterer Vorteil der erfindungsgemäßen Profilanordnung1 besteht darin, dass bei bestimmungsgemäßem Einsatz an einem Verschlusselement und/oder an einem Korpus eines Kühl- und / oder Gefriergerätes der durch fertigungsbedingte und/oder montagebedingte Toleranzen entstehende Spalt unmittelbar, vollständig sowie optisch ansprechend abdeckbar ist.

Mit der erfindungsgemäßen Profilanordnung 1 ist es somit überraschenderweise erstmals und überhaupt möglich, das Design bzw. die Haptik insbesondere von Kühl- und/oder Gefriergeräten in einer Echtmetall- Optik bzw. Echtmetall- Haptik zu realisieren.

## Patentansprüche

1. Profilanordnung (1) für ein Kühl- und / oder Gefriergerät (10), umfassend
wenigstens eine Basis (8), wenigstens eine Befestigungsanordnung (2), wenigstens ein Beschichtungselement (5), sowie wenigstens eine Dichtungsanordnung (3), welche wenigstens eine Hohlkammer (30, 31, 32, 33) aufweist und aus einem weichelastischem, polymeren Werkstoff hergestellt ist, mit einer Härte Shore A gemäß DIN EN ISO 868 von etwa 60 bis 90, wobei das Beschichtungselement (5) stoffschlüssig an der Dichtungsanordnung (3) angeordnet ist, wobei das Beschichtungselement (5) stoffschlüssig an wenigstens einer, die Hohlkammer (30, 31, 32, 33) umgehenden, Wand der Dichtungsanordnung (3) angeordnet ist, **dadurch gekennzeichnet, dass** das Beschichtungselement (5) wenigstens eine Oberschicht (51) sowie wenigstens eine damit verbundene Unterschicht (52) aufweist, dass die Unterschicht (52) des Beschichtungselementes (5) auf dem Werkstoff basiert, aus welchem die Dichtungsanordnung (3) gefertigt ist.

2. Profilanordnung (1) nach Anspruch 1, **dadurch gekennzeichnet, dass** die Profilanordnung (1) als auch die Unterschicht (52) des Beschichtungselementes (5) wenigstens teilweise einen polymeren Werkstoff aufweist, ausgewählt aus der Gruppe wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol PPY);Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien.

3. Profilanordnung (1) nach einem der vorhergehenden Ansprüche, **dadurch gekennzeichnet, dass** die Unterschicht (52) des Beschichtungselementes (5) wenigstens teilweise einen reaktiven, aktivierbaren Klebstoff aufweist.

4. Profilanordnung (1) nach einem der vorhergehenden Ansprüche, **dadurch gekennzeichnet, dass** die Oberschicht (51) des Beschichtungselementes (5) wenigstens teilweise als Dekorelement ausgebildet und/oder wenigstens ein Dekorelement aufweist.

5. Profilanordnung (1) nach einem der vorhergehenden Ansprüche, **dadurch gekennzeichnet, dass** die Dicke des Beschichtungselementes (5) zwischen 0,01 bis 0,5 mm, vorzugsweise zwischen 0,01 bis 0,25 mm liegt.

6. Profilanordnung (1) nach einem der vorhergehenden Ansprüche, **dadurch gekennzeichnet, dass** die die Hohlkammer (30, 31, 32, 33) umgehenden Wände der Dichtungsanordnung (3) eine Wandstärke von etwa 0,1 bis 2 mm, vorzugsweise etwa 0,2 bis 1,5 mm aufweisen

7. Verschlusselement (20) für ein Kühl- und / oder Gefriergerät (10) mit einer Profilanordnung (1) nach wenigstens einem der Ansprüche 1 bis 6.

8. Kühl- und / oder Gefriergerät (10) mit einer Profilanordnung (1) nach wenigstens einem der Ansprüche 1 bis 6.

## Claims

1. Profile arrangement (1) for a refrigerator and/or freezer (10), comprising at least one base (8), at least one fastening arrangement (2), at least one coating element (5), and at least one sealing arrangement (3) which comprises at least one cavity (30, 31, 32, 33) and is produced from a flexible polymer material having a Shore A hardness according to DIN EN ISO 868 of from approximately 60 to 90, wherein the coating arrangement (5) is arranged on the sealing arrangement (3) in a firmly bonded manner, wherein the coating element (5) is arranged, in a firmly bonded manner, on at least one wall of the sealing arrangement (3) that surrounds the cavity (30, 31, 32, 33), **characterised in that** the coating element (5) comprises at least one top layer (51) and at least one bottom layer (52) that is connected thereto, **in that** the bottom layer (52) of the coating element (5) is based on the material from which the sealing arrangement (3) is manufactured.

2. Profile arrangement (1) according to claim 1, **characterised in that** the profile arrangement (1) and the bottom layer (52) of the coating element (5) comprises, at least in part, a polymer material selected from the group such as polyvinyl chloride (PVC); polyolefin, such as polypropylene (PP) or polyethylene (PE); styrene-based polymer, such as polystyrene (PS) or styrene-butadiene copolymer having a predominant styrene content (SB) or acrylonitrile styrene acrylate copolymers (ASA) or acrylonitrile butadiene styrene copolymers (ABS) or styrene acrylonitrile (SAN); polybutylene terephthalate (PBT); polyethylene terephthalate (PET); polyoxymethylene (POM); polyamide (PA); polymethyl methacrylate (PMMA); polyphenylene oxide (PPO); polyether ether ketone (PEEK); polyphenylene sulphide (PPS); liquid crystal polymer (LCP); polyamide-imide (PAI); polyvinylidene fluoride (PVDF); polyphenylsulfone (PPSU); polyaryletherketone (PAEK); polyacrylonitrile (PAN); polychlorotrifluoroethylene (PCTFE); polyether ketone (PEK); polyimide (PI); polyisobutene (PIB); polyphthalamide (PPA); polypyrrole (PPY); polytetrafluoroethylene (PTFE); polyurethane (PUR); polyvinyl alcohol (PVA); polyvinyl acetate (PVAC); polyvinylidene chloride (PVDC); and mixtures of at least two of said materials.

3. Profile arrangement (1) according to either of the preceding claims, **characterised in that** the bottom layer (52) of the coating element (5) comprises a reactive, activatable adhesive, at least in part.

4. Profile arrangement (1) according to any of the preceding claims, **characterised in that** the top layer (51) of the coating element (5) is designed at least in part as a decorative element and/or comprises at least one decorative element.

5. Profile arrangement (1) according to any of the preceding claims, **characterised in that** the thickness of the coating element (5) is between 0.01 to 0.5 mm, preferably between 0.01 to 0.25 mm.

6. Profile arrangement (1) according to any of the preceding claims, **characterised in that** the walls of the sealing arrangement (3), surrounding the cavity (30, 31, 32, 33), have a wall thickness of from approximately 0.1 to 2 mm, preferably approximately 0.2 to 1.5 mm.

7. Closure element (20) for a refrigerator or freezer (10) comprising a profile arrangement (1) according to at least one of claims 1 to 6.

8. Refrigerator and/or freezer (10) comprising a profile arrangement (1) according to at least one of claims 1 to 6.

## Revendications

1. Ensemble profilé (1) pour un appareil de réfrigération et/ou de congélation (10), comprenant au moins une base (8), au moins un ensemble de fixation (2), au moins un élément de revêtement (5), ainsi qu'au moins un ensemble d'étanchéité (3), lequel présente au moins une chambre creuse (30, 31, 32, 33) et est fabriqué à partir d'un matériau polymère élastique souple, avec une dureté Shore A selon la norme DIN EN ISO 868 d'environ 60 à 90, dans lequel l'élément de revêtement (5) est disposé par liaison de matière sur l'ensemble d'étanchéité (3), dans lequel l'élément de revêtement (5) est disposé par liaison de matière sur au moins une paroi, entourant la chambre creuse (30, 31, 32, 33), de l'ensemble d'étanchéité (3), **caractérisé en ce que** l'élément de revêtement (5) présente au moins une couche supérieure (51) ainsi qu'au moins une couche inférieure (52) reliée à celle-ci, que la couche inférieure (52) de l'élément de revêtement (5) est à base du matériau à partir duquel l'ensemble d'étanchéité (3) est produit.

2. Ensemble profilé (1) selon la revendication 1, **caractérisé en ce que** l'ensemble profilé (1) ainsi que la couche inférieure (52) également de l'élément de revêtement (5) présentent au moins en partie un matériau polymère choisi parmi le groupe : chlorure de polyvinyle (PVC) ; polyoléfine, comme le polypropylène (PP) ou le polyéthylène (PE) ; polymère à base de styrène, comme le polystyrène (PS) ou le copolymère styrène-butadiène avec une proportion de styrène (SB) prépondérante ou des copolymères acrylonitrile-styrène-ester acrylique (ASA) ou des copolymères acrylonitrile-butadiène-styrène (ABS) ou du styrène-acrylonitrile (SAN) ; polytéréphtalate de butylène (PBT) ; polytéréphtalate d'éthylène (PET) ; polyoxyméthylène (POM) ; polyamide (PA) ; polyméthacrylate de méthyle (PMMA) ; polyoxyde de phénylène (PPO) ; polyétheréthercétone (PEEK) ; polysulfure de phénylène (PPS) ; polymère à cristaux liquides (LCP) ; polyamidimides (PAI) ; polyfluorure de vinylidène (PVDF) ; polyphénylène sulfone (PPSU) ; polyaryléthercétone (PAEK) ; polyacrylonitrile (PAN) ; polychlorotrifluoroéthylène (PCTFE) ; polyéthercétone (PEK) ; polyimide (PI) ; polyisobutène (PIB) ; polyphtalamide (PPA) ; polypyrrole (PPY) ; polytétrafluoroéthylène (PTFE) ; polyuréthane (PUR) ; alcool polyvinylique (PVA) ; polyacétate de vinyle (PVAC) ; polychlorure de vinylidène (PVDC) ; ainsi que des mélanges d'au moins deux de ces matériaux.

3. Ensemble profilé (1) selon l'une quelconque des revendications précédentes, **caractérisé en ce que** la couche inférieure (52) de l'élément de revêtement (5) présente au moins en partie une colle activable réactive.

4. Ensemble profilé (1) selon l'une quelconque des revendications précédentes, **caractérisé en ce que** la couche supérieure (51) de l'élément de revêtement (5) est réalisée au moins en partie en tant qu'élément décoratif et/ou présente au moins un élément décoratif.

5. Ensemble profilé (1) selon l'une quelconque des revendications précédentes, **caractérisé en ce que** l'épaisseur de l'élément de revêtement (5) se situe entre 0,01 à 0,5 mm, de préférence entre 0,01 à 0,25 mm.

6. Ensemble profilé (1) selon l'une quelconque des revendications précédentes, **caractérisé en ce que** les parois, entourant la chambre creuse (30, 31, 32, 33), de l'ensemble d'étanchéité (3) présentent une épaisseur de paroi d'environ 0,1 à 2 mm, de préférence d'environ 0,2 à 1,5 mm.

7. Elément de fermeture (20) pour un appareil de réfrigération et/ou de congélation (10) avec un ensemble profilé (1) selon au moins l'une quelconque des revendications 1 à 6.

8. Appareil de réfrigération et/ou de congélation (10) avec un ensemble profilé (1) selon au moins l'une quelconque des revendications 1 à 6.
